# EUROPEAN PATENT APPLICATION

(11) **EP 4 207 934 A1**
(43) Date of publication of application: **05.07.2023**
(21) Application number: 21860321.5
(22) Date of filing: 23.08.2021
(51) Int. Cl.: H04W 76/28, H04W 76/27, H04W 52/02

(54) **SIDELINK DISCONTINUOUS RECEPTION CONTROL METHOD AND APPARATUS, DEVICE, AND READABLE STORAGE MEDIUM**

(30) Priority: 27.08.2020 CN 202010880352
(71) Applicant: Vivo Mobile Communication Co., Ltd., Dongguan, Guangdong 523863 (CN)
(72) Inventor: LIANG, Jing, Dongguan, Guangdong 523863 (CN); LIU, Siqi, Dongguan, Guangdong 523863 (CN)
(74) Representative: Conti, Marco
(86) International application number: PCT/CN2021/114077
(87) International publication number: WO 2022/042486

(57) **Abstract**

This application discloses a sidelink discontinuous reception control method and apparatus, a device, and a readable storage medium. The method includes: receiving, by a terminal, control signaling, where the control signaling is used for Uu and/or PC5 Sidelink DRX control; and performing, by the terminal, Sidelink DRX control according to the control signaling; where the control signaling is medium access control MAC signaling.

## Description

### CROSS-REFERENCE TO RELATED APPLICATIONS

This application claims priority to Chinese Patent Application No. 202010880352.6, filed on August 27, 2020 in China, which is incorporated herein by reference in its entirety.

### TECHNICAL FIELD

This application pertains to the field of communication technologies, and specifically, relates to a sidelink (Sidelink, SL) discontinuous reception (Discontinuous Reception, DRX) control method and apparatus, a device, and a readable storage medium.

### BACKGROUND

Existing designs based on Uu DRX enable terminals to do their best efforts to minimize unnecessary downlink control channel monitoring. For sidelink, if sidelink DRX is introduced to PC5 to implement control on sidelink control channel monitoring or transmission, power saving can also be achieved.

How sidelink DRX is controlled by using Uu or PC5 signaling is a problem to be resolved urgently.

### SUMMARY

Embodiments of this application are intended to provide a sidelink discontinuous reception control method and apparatus, a device, and a readable storage medium, so as to resolve the problem of how sidelink DRX is controlled by using Uu interface or PC5 interface signaling.

According to a first aspect, a Sidelink DRX control method is provided, including:
receiving, by a terminal, control signaling, where the control signaling is used for Uu and/or PC5 Sidelink DRX control; and
performing, by the terminal, Sidelink DRX control according to the control signaling; where
the control signaling is MAC signaling.

According to a second aspect, a Sidelink DRX control apparatus is provided, applied to a terminal and including:
a receive module, configured to receive control signaling, where the control signaling is used for Uu and/or PC5 Sidelink DRX control; and
a control module, configured to perform Sidelink DRX control according to the control signaling; where
the control signaling is MAC signaling.

According to a third aspect, a terminal is provided, including a processor, a memory, and a program stored in the memory and capable of running on the processor, where when the program is executed by the processor, the steps of the method according to the first aspect are implemented.

According to a fourth aspect, a readable storage medium is provided. The readable storage medium stores a program or instructions, and when the program or instructions are executed by a processor, the steps of the method according to the first aspect are implemented.

According to a fifth aspect, a terminal is provided, including a processor, a memory, and a program stored in the memory and capable of running on the processor, and when the program is executed by the processor, the steps of the method according to the first aspect are implemented.

According to a sixth aspect, a readable storage medium is provided. The readable storage medium stores a program or instructions, and when the program or instructions are executed by a processor, the steps of the method according to the first aspect are implemented.

According to a seventh aspect, a program product is provided. The program product is stored in a non-volatile storage medium, and the program product is executed by at least one processor to implement the steps of the method according to the first aspect.

According to an eighth aspect, a chip is provided. The chip includes a processor and a communication interface, where the communication interface is coupled to the processor, and the processor is configured to run a program or instructions to implement the method according to the first aspect.

According to the embodiments of this application, MAC signaling is used to control sidelink DRX to implement efficient and flexible control on sidelink DRX.

### BRIEF DESCRIPTION OF DRAWINGS

FIG. 1 is a schematic diagram of a DRX cycle;
FIG. 2 is a schematic diagram of a time line flow of wake-up signal before CDRX on duration;
FIG. 3 is a schematic diagram of LTE uplink, downlink and sidelink;
FIG. 4 is a schematic diagram of DL MAC PDU;
FIG. 5 is a schematic diagram of LTL MAC PDU;
FIG. 6 is a schematic diagram of an R/F/LCID/L MAC subheader with an 8-bit L field;
FIG. 7 is a schematic diagram of an R/F/LCID/L MAC subheader with a 16-bit L field;
FIG. 8 is a schematic diagram of an R/LCID/L MAC subheader;
FIG. 9 is a schematic diagram of an E/T/R/R/BI MAC subheader;
FIG. 10 is a schematic diagram of an E/T/RAPID MAC subheader;
FIG. 11 is a schematic diagram of MAC PDU including MAC header, MAC SDU, and padding (padding);
FIG. 12 is a first schematic diagram of an R/R/E/LCID/F/L MAC subheader;
FIG. 13 is a second schematic diagram of an R/R/E/LCID/F/L MAC subheader;
FIG. 14 is a schematic diagram of an R/R/E/LCID MAC subheader;
FIG. 15 is a schematic diagram of an SL-SCH MAC subheader with V = "0001" and "0010";
FIG. 16 is a schematic diagram of an SL-SCH MAC subheader with V = "0011";
FIG. 17 is a block diagram of a wireless communication system to which embodiments of this application are applicable;
FIG. 18 is a schematic diagram of a sidelink discontinuous reception control method according to an embodiment of this application;
FIG. 19 is a schematic diagram of multiplexing DRX Command MAC CE according to an embodiment of this application;
FIG. 20 is a first schematic diagram of newly designed MAC CE according to an embodiment of this application;
FIG. 21 is a second schematic diagram of newly designed MAC CE according to an embodiment of this application;
FIG. 22 is a third schematic diagram of newly designed MAC CE according to an embodiment of this application;
FIG. 23 is a fourth schematic diagram of newly designed MAC CE according to an embodiment of this application;
FIG. 24 is a fifth schematic diagram of newly designed MAC CE according to an embodiment of this application;
FIG. 25 is a sixth schematic diagram of newly designed MAC CE according to an embodiment of this application;
FIG. 26 is a schematic diagram of new PC5 MAC CE according to an embodiment of this application;
FIG. 27 is a schematic diagram of MAC CE according to an embodiment of this application;
FIG. 28 is a schematic diagram of a sidelink discontinuous reception control apparatus according to an embodiment of this application; and
FIG. 29 is a schematic diagram of a terminal according to an embodiment of this application.

### DETAILED DESCRIPTION OF EMBODIMENTS

To facilitate understanding of the embodiments of this application, the following technical points are first described.

### (1) DRX in radio resource control idle state (RRC_IDLE)

In long term evolution (Long Term Evolution, LTE) or fifth generation mobile communication technology (5th generation, 5G) communication systems, UE in RRC_IDLE state needs to monitor, at a preconfigured time, for a paging signal sent by a base station, and a process of monitoring the paging signal is as follows:
Blind detection is performed for a physical downlink control channel (Physical Downlink Control Channel, PDCCH) corresponding to a paging radio network temporary identity (Paging-RNTI, P-RNTI). If no PDCCH is detected, the detection is terminated. If the PDCCH is detected, further detection is performed for a physical downlink shared channel (Physical Downlink Shared Channel, PDSCH) indicated by the PDCCH, and if the detected PDSCH is not a paging signal for this terminal, the detection is terminated; or the detected PDSCH is a paging signal for this terminal.

The terminal in RRC_IDLE state periodically monitors paging signals, but a probability of receiving paging signals belonging to the LTE is relatively low. In addition, power consumption for PDCCH and PDSCH detection each time is high, which is not conducive to terminal power saving.

### (2) DRX in a radio resource control connected state (RRC connected)

Discontinuous reception (Discontinuous Reception, DRX) is used for the purpose of power saving. A terminal in DRX state does not need to continuously monitor a control channel. However, if the terminal does not monitor the control channel for a long time, a data transmission delay is increased once data arrives. In order to balance power saving and transmission delay, according to duration of channel monitoring by the terminal, 5G media access control (Media Access Control, MAC) supports two types of DRX cycles: long DRX cycle and short DRX cycle. If terminal data traffic is predicted to arrive frequently or a service is delay sensitive, a network may configure the terminal to use short DRX cycle. If terminal data traffic is predicted to arrive not densely and service is not delay sensitive, the network may configure the terminal to use only long DRX cycle. To facilitate switching of the terminal between long DRX cycle and short DRX cycle, the long DRX cycle is required to be an integer multiple of the short DRX cycle. In this way, long DRX cycle and short DRX cycle can be aligned in onduration (onduration).

To support a DRX mechanism, a base station configures DRX-related timers and parameters for the terminal, specifically including the following.
- drx-LongCycleStartOffset: used to configure the duration and offset of a long DRX cycle, and the duration and offset are measured in milliseconds.
- drx-ShortCycle: used to configure the duration and offset of a short DRX cycle, and the duration and offset are measured in milliseconds.
- drx-ShortCycleTimer: used to control the duration the terminal uses the short DRX cycle, and configured as an integer, indicating integer number of short cycles the terminal is to follow once entering a short DRX cycle.
- drx-onduration Timer: a DRX on duration timer. During running of the timer, the terminal needs to continuously monitor PDCCH control channel of the network. The timer is described in milliseconds.
- drx-SlotOffset: the delay before starting the drx-onduration Timer by the terminal. This parameter is used to set an offset of a start time of DRX onduration with respect to the beginning of a subframe. The offset is an integer multiple of 1/32 milliseconds.
- drx-InactivityTimer: a DRX inactivity timer. The timer starts in the first symbol after the terminal receives PDCCH signaling for scheduling new uplink/downlink data. During running of the timer, the terminal needs to continuously monitor a control channel. The timer is described in milliseconds.
- drx-HARQ-RTT-TimerDL: a downlink hybrid automatic repeat request (Hybrid Automatic Repeat reQuest, HARQ) round trip time (Round-Trip Time, RTT) timer. The timer is maintained per downlink process, and length of the timer is a minimum duration between a HARQ feedback occasion and reception of HARQ retransmission for such process. The terminal starts, only if data corresponding to the downlink process is not successfully decoded, the timer in the first symbol after HARQ negative acknowledgment (Negative-Acknowledgment, NACK) feedback of the process. If currently the terminal has only drx-HARQ-RTT-TimerDL and/or drx-HARQ-RTT-TimerLTL running, the terminal does not need to monitor a PDCCH control channel. The timer is described in symbols.
- drx-HARQ-RTT-TimerUL: an uplink HARQ RTT timer. The timer is maintained per uplink process, and length of the timer is a minimum duration between physical uplink shared channel (Physical Uplink Shared Channel, PUSCH) transmission occasion and reception of HARQ retransmission for such process. After uplink PUSCH transmission, the terminal starts an uplink HARQ RTT timer for the uplink process. If PUSCH repetition (PUSCH repetition) is used for the PUSCH transmission, the uplink HARQ RTT timer starts after the first PUSCH repetition, so as to ensure that the base station can timely terminate PUSCH transmission repetition after parsing the PUSCH in advance. The timer is described in symbols.
- drx-RetransmissionTimerDL: a downlink retransmission timer. The timer starts in a next symbol after the expiry of drx-HARQ-RTT-TimerDL. The terminal monitors the network control channel during running of the timer, and stops the timer if the terminal receives downlink scheduling information or a downlink configured grant (configured grant) for this process. The timer is described in slots (slot).
- drx-RetransmissionTimerUL: an uplink retransmission timer. The timer starts in a next symbol after the expiry of drx-HARQ-RTT-TimerUL. The terminal monitors a network control channel during running of the timer, and stops the timer if the terminal receives uplink scheduling information or an uplink configured grant for this process. The timer is described in slots (slot).

These are an existing DRX basic mechanism and related parameters involved. All these parameters constitute a DRX configuration set, according to which the LTE performs corresponding discontinuous reception operations.

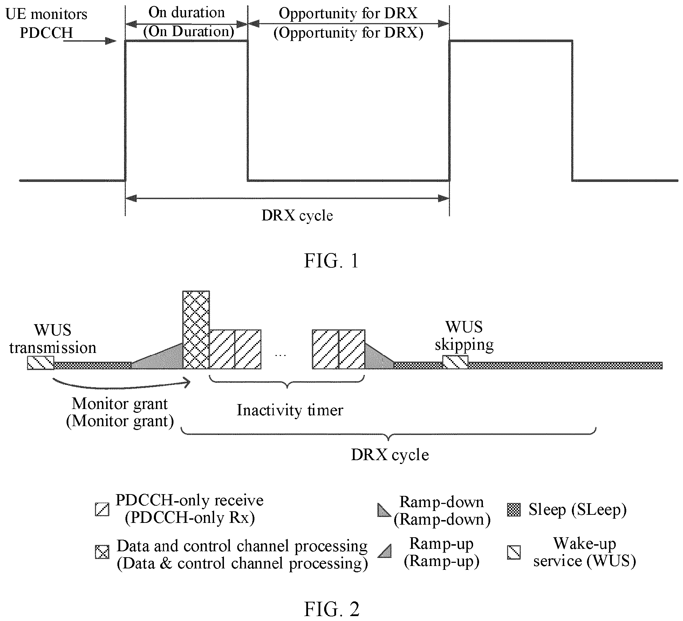

As shown in FIG. 1, in time domain, time is divided into successive DRX cycles.

In order to further reduce power consumption of blind detection for paging signals or PDCCH under the above two DRX cycles, concepts of wake-up signal (wake-up signal, WUS) and sleep signal (collectively referred to as power saving signal (power saving signal)) are proposed.

### (3) Power saving signal in RRC_IDLE or radio resource control inactive (RRC_inactive) state

In each paging (paging) cycle in idle (idle) state, before a paging occasion (Paging Occasion, PO), a base station transmits a power saving signal to a terminal, and the terminal performs detection for the power saving signal at a corresponding occasion.

If the power saving signal indicates that the terminal monitors PDCCH at the PO, the terminal monitors the PDCCH.

If the power saving signal does not indicate that the terminal monitors PDCCH at the PO, the terminal does not monitor the PDCCH.

Optionally, compared with blind detection for a paging signal or PDCCH, wake-up signal detection is less complex and less power consuming.

### (4) Power saving signal in RRC_connected state

As shown in FIG. 2, in each connected discontinuous reception (connected discontinuous reception, CDRX) cycle in RRC_connected state, the base station transmits a power saving signal to the terminal before or at the start of onduration, and the terminal monitors the power saving signal at the corresponding time.

If the power saving signal indicates that the terminal monitors PDCCH in the onduration, the terminal monitors PDCCH.

If the power saving signal does not indicate that the terminal monitors PDCCH in the onduration, the terminal does not monitor PDCCH.

Optionally, compared with blind detection for paging signal or PDCCH, wake-up signal detection is less complex and less power consuming.

The above power saving signal may be a signal similar to PDCCH, or a sequence-related signal such as channel-state information reference signal (Channel-state information RS, CSI-RS) or on-off keying (on-off keying, OOK) signal.

### (5) Introduction to sidelink

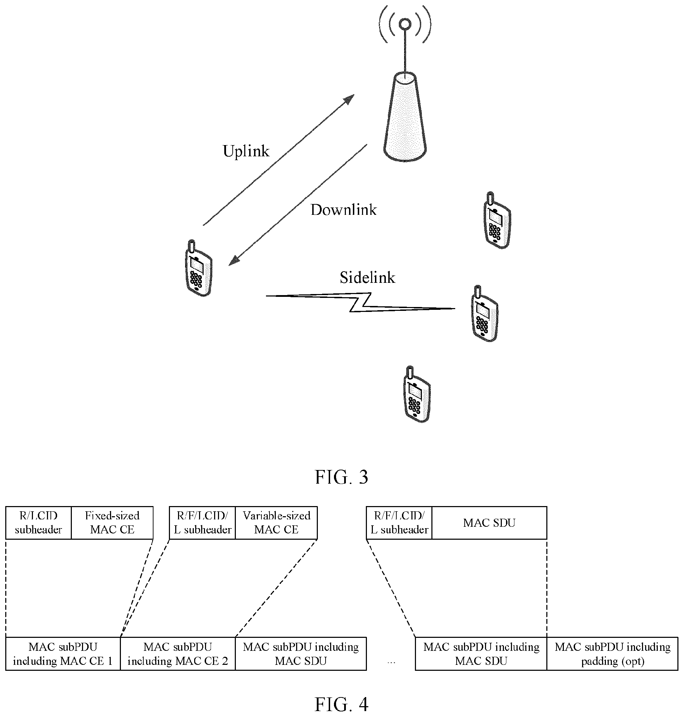

As shown in FIG. 3, since Release 12, long term evolution (Long Term Evolution, LTE) systems have supported sidelink (Sidelink) for direct data transmission between user equipments (User Equipment, UE) without a network device.

LTE sidelink is designed to be suitable for the communication for specific public safety affairs (for example, emergency communication at sites of fire or disasters such as earthquake), vehicle to everything (vehicle to everything, V2X), and the like. Vehicle to everything communication includes various services, for example, basic safety communication, advanced driving (self-driving), platooning, and sensor extension. Because LTE sidelink supports only broadcast communication, LTE sidelink is mainly used for basic safety communication. Other advanced V2X services with strict quality of service (Quality of Service, QoS) requirements in terms of latency and reliability will be supported by new radio (New Radio, NR) sidelink.

5G NR systems can operate on frequency bands above 6 GHz which are not supported by LTE, and thus supports larger operating bandwidths. However, in current releases, the NR system supports only the interface between the base station and the terminal, but not the sidelink interface for direction communication between terminals.

### (6) Transmission modes of sidelink

Currently, sidelink transmission mainly includes these transmission modes: broadcast (broadcast), groupcast (groupcast), and unicast (unicast). Unicast, as its name suggests, is one-to-one transmission. Groupcast is one-to-many transmission. Broadcast is also one-to-many transmission, but has no concept that LTEs belong to a same group.

Currently, both sidelink unicast communication and sidelink groupcast communication support the physical layer hybrid automatic repeat request (Hybrid Automatic Repeat reQuest, HARQ) feedback mechanism.

### 1. Resource allocation modes: Mode 1 and Mode 2

Two resource allocation modes are provided in total for sidelink UEs.
(1) Base-station-scheduled mode (Mode 1): The network-side device (base station) performs control and allocates resources to each UE.
(2) UE autonomous mode (Mode 2): Each UE autonomously selects resources.

### (7) NR MAC PDU

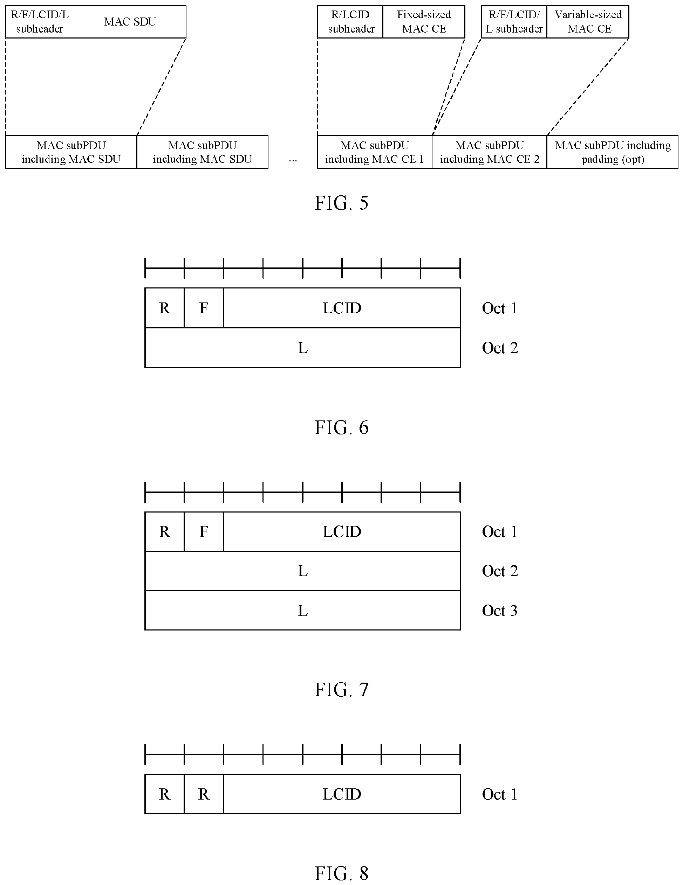

Unlike LTE, NR no longer places the media access control (Media Access Control, MAC) header and MAC subheaders all in the frontmost of a MAC protocol data unit (Protocol Data Unit, PDU). Instead, a MAC subheader and a MAC service data unit (service Data Unit, SDU) or MAC control element (Control Element, CE) form a MAC protocol data subunit (subPDU), as shown in FIG. 4 and FIG. 5.

Each subPDU possibly includes:
- only MAC subheader (including padding);
- MAC subheader and MAC SDU;
- MAC subheader and MAC CE; and
- MAC subheader and padding.

In addition, for the MAC subheader (in uplink and dowlink shared channels, for example), the following cases apply: the first two possibilities are for MAC CE of a variable size (size), as shown in FIG. 6 and FIG. 7; and the last one is for fixed-sized MAC CE with only subheader, as shown in FIG. 8.

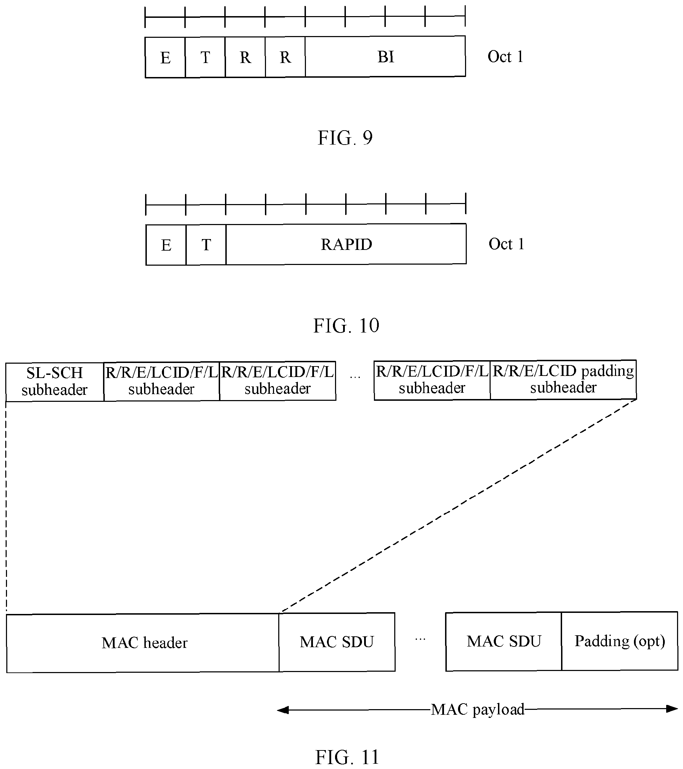

As shown in FIG. 9 and FIG. 10, MAC subheaders for other purposes can be specifically designed. For example, for random access, MAC subheaders are as follows.

### (8) MAC PDU for sidelink in LTE

As shown in FIG. 11, a MAC PDU includes a MAC header (variable-sized), a MAC SDU (variable-sized), and padding, where padding is optional. The MAC header includes one SL-SCH subheader and one or more MAC PDU subheaders, where each subheader corresponds to one MAC SDU.

The SL-SCH subheader has seven fields: V/R/R/R/R/SRC/DST.

The MAC PDU subheader possibly has six fields R/R/E/LCID/F/L, or four fields RIR/E/LCID.

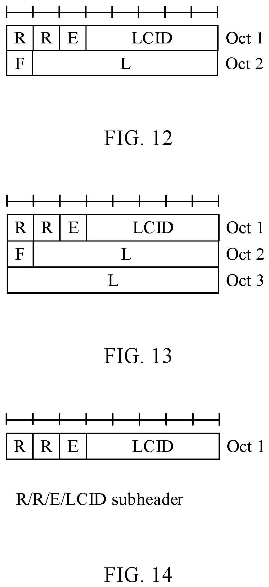

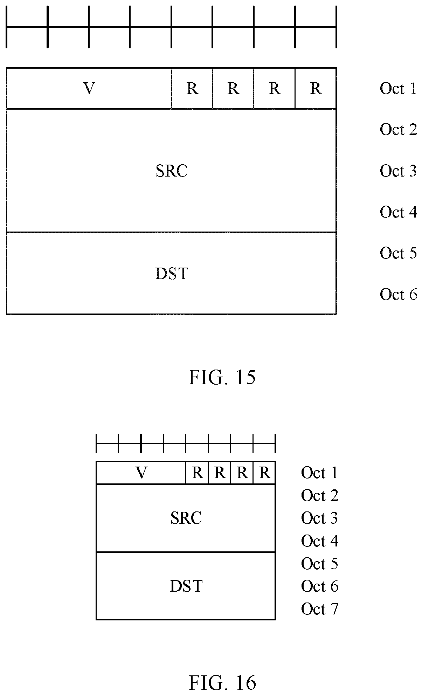

Refer to FIG. 12 and FIG. 13, where the SL-SCH subheader is shown. Refer to FIG. 14, FIG. 15, and FIG. 16, where the MAC PDU subheader is shown.

The following are specific meanings of the fields (field).
- V: This is the MAC PDU format version number field indicating which version of SL-SCH subheader is used. In the version indicated by the MAC PDU format version number field, three format versions are defined, and therefore this field should be set to "0001", "0010", or "0011". If the DST field has 24 bits, this field should be set to "0011". The size of V field is 4 bits.
- SRC: This is the source layer-2 ID field carrying a source identity. It is set to ProSe UE ID. The size of SRC field is 24 bits.
- DST: The DST field may be 16 bits or 24 bits long. If the DST field is 16 bits long, it carries 16 most significant bits of the target layer-2 ID. If the DST field is 24 bits long, it is set to "target layer-2 ID". For sidelink communication, the target layer-2 ID is set to ProSe layer-2 group ID or Prose LTE ID. For V2X sidelink communication, the target layer-2 ID is set to an identifier defined in the protocol, which is provided by upper layers. If the V field is set to "0001", this identifier is a groupcast identifier. If the V field is set to "0010", this identifier is a unicast identifier.
- LCID: This is the logical channel ID field uniquely identifying a logical channel instance within a source layer-2 ID and target layer-2 ID pair corresponding to the MAC SDU or padding, as described in Table 1. For each MAC SDU or padding included in a MAC PDU, an LCID field is provided. In addition, in a case that single-octet or two-octet padding is required but cannot be achieved by padding at the end of the MAC PDU, the MAC PDU further includes one or two additional LCID fields. LCID values from "01011" to "10100" identify logical channels used for sending RLC SDU duplications. The LCID values of these logical channels are arranged in order from "00001" to "01010". The size of LCID field is 5 bits.

| Index (Index) | LCID value |
|---|---|
| 00000 | Reserved |
| 00001-01010 | Logical channel identifier |
| 01011-10100 | Logical channel identifier for duplications (duplication) |
| 10101-11011 | Reserved |
| 11100 | Unprotected PC5-S message |
| 11101 | PC5-S messages "direct security mode command" and "direct security mode complete" |
| 11110 | Other protected PC5-S messages |
| 11111 | Padding |

- L: This is the length field indicating the length (in octets) of a corresponding MAC SDU. There is one L field per MAC PDU subheader except for the last subheader. The size of L field is indicated by the F field.
- F: This is the format field indicating the size of the length field, as shown in Table 2. There is one F field per MAC PDU subheader except for the last subheader. The size of F field is 1 bit. If a MAC SDU is sized less than 128 octets, the F field is set to 0, and otherwise the F field is set to 1.

**Table 2:**

| Index (Index) | Size of Length field (in bits) (Size of Length field (in bits)) |
|---|---|
| 0 | 7 |
| 1 | 15 |

- E: The extension field is a flag indicating whether more fields are present in the MAC header. The E field is set to "1" to indicate at least one other set of R/R/E/LCID fields. The E field is set to "0" to indicate that MAC SDU or padding starts from a next octet.
- R: Reserved bit, set to "0".

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, objects distinguish by "first" and "second" are usually of a same type, and the number of such objects are not limited. For example, a first object may be one object or a plurality of objects. In addition, in this specification and claims, "and/or" represents at least one of connected objects, and the character "/" generally represents an "or" relationship between the associated objects.

It should be noted that the technologies described in the embodiments of this application are not limited to long term evolution (Long Term Evolution, LTE)/LTE-advanced (LTE-Advanced, LTE-A) systems, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. However, in the following descriptions, a new radio (New Radio, NR) system is described for an illustration purpose, NR terms are used in most of the following descriptions, although these technologies may also be applied to other applications than an NR system application, for example, a 6th generation (6^{th} Generation, 6G) communication system.

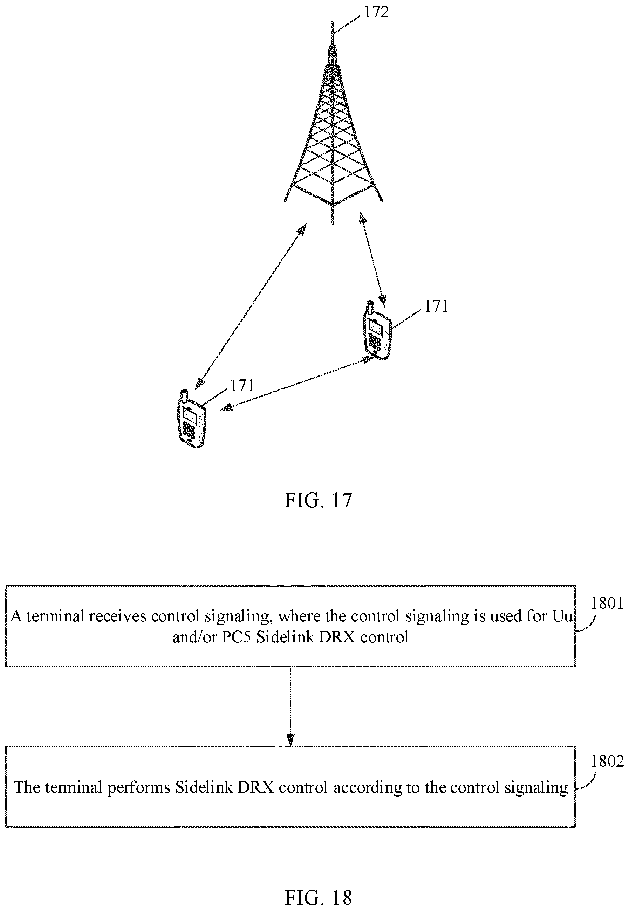

FIG. 17 is a block diagram of a wireless communication system to which embodiments of this application are applicable. The wireless communication system includes a terminal 171 and a network-side device 172. The terminal 171 may also be referred to as a terminal device or user equipment (User Equipment, UE). The terminal 171 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), or vehicle user equipment (VLTE), or pedestrian user equipment (PUE). The wearable device includes a bracelet, a headset, a pair of glasses, and the like. It should be noted that the terminal 171 is not limited to any specific type in the embodiments of this application. The network-side device 172 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that a same technical effect is achieved, the base station is not limited to any specific technical term. It should be noted that in the embodiments of this application, the base station in the NR system is merely used as an example, and a specific type of the base station is not limited.

The following specifically describes the Sidelink DRX control method and apparatus provided in the embodiments of this application through specific embodiments and application scenarios thereof with reference to the accompanying drawings.

As shown in FIG. 18, an embodiment of this application provides a Sidelink DRX control method, and specific steps include: step 1801 and step 1802.

Step 1801. A terminal receives control signaling, where the control signaling is used for Uu and/or PC5 Sidelink DRX control, and the control signaling is MAC signaling.

Optionally, the control signaling includes DRX command MAC CE; or the control signaling includes Long DRX command MAC CE; or the control signaling includes new Uu MAC CE; or the control signaling includes new PC5 MAC CE.

Step 1802. The terminal performs Sidelink DRX control according to the control signaling.

For example, according to the control signaling, the terminal stops Sidelink drx-onDurationTimer, or stops sidelink drx-InactivityTimer.

In this embodiment of this application, the control signaling includes DRX command MAC CE, and the DRX command MAC CE includes first information used to indicate that the DRX command MAC CE is used to control Sidelink DRX, the first information being an LCID; or in a case that the terminal is configured with Sidelink DRX and Uu DRX, the DRX command MAC CE is used to control Sidelink DRX and Uu DRX.

Optionally, the DRX command MAC CE may further include second information used to indicate that the DRX command MAC CE is a DRX command for Uu and/or PC5. Optionally, the second information is one or more reserved fields in the DRX command MAC CE.

In this embodiment of this application, the control signaling includes Long DRX command MAC CE, and the Long DRX command MAC CE includes third information used to indicate that the Long DRX command MAC CE is used to control Sidelink DRX, the third information being an LCID; or in a case that the terminal is configured with Sidelink DRX and Uu DRX, the Long DRX command MAC CE is used to control Sidelink DRX and Uu DRX.

Optionally, the Long DRX command MAC CE may further include fourth information used to indicate that the Long DRX command MAC CE is a Long DRX command for Uu and/or PC5; and optionally, the fourth information is one or more reserved fields in the Long DRX command MAC CE.

In this embodiment of this application, the control signaling includes new Uu MAC CE,
and the new Uu MAC CE includes a logical channel identifier (Logical Channel Identifier, LCID) and/or an extended logical channel identifier (eLCID), the LCID and/or eLCID being used to indicate that the new Uu MAC CE is used to control Sidelink DRX.

Optionally, the LCID or eLCID is provided in a quantity of at least two; and a first LCID or eLCID is used to indicate that the new Uu MAC CE is a DRX command MAC CE, and a second LCID or eLCID is used to indicate that the new Uu MAC CE is a Long DRX command MAC CE.

Optionally, the new Uu MAC CE further includes fifth information, the fifth information indicating that the new Uu MAC CE is a DRX command MAC CE or a Long DRX command MAC CE.

In some embodiments, the new Uu MAC CE further includes sixth information; and
the sixth information carries one or more of the following:
(1) a link identifier (link ID), used to indicate DRX configuration corresponding to a link controlled by the new Uu MAC CE;
(2) a destination identifier (destination ID), used to indicate DRX configuration corresponding to a destination controlled by the new Uu MAC CE; and
(3) a pool identifier (pool ID), used to indicate DRX configuration corresponding to a pool controlled by the new Uu MAC CE.

In this embodiment of this application, the control signaling includes new PC5 MAC CE, and the new PC5 MAC CE includes a MAC subheader and a MAC CE, where the size of the MAC CE is zero or non-zero.

In this embodiment of this application, a priority of the new PC5 MAC CE is determined in at least one of the following manners:
(1) being specified by a protocol,
   for example, the priority of the new PC5 MAC CE is always equal to 1, or the new PC5 MAC CE is in a fixed priority order with other MAC CEs;
(2) being configured on a network side,
   for example, being configured by a base station;
(3) referring to a priority of another transmission,
   for example, a priority related to services between a terminal (UE1) and another terminal (LTE2), and optionally, the highest or lowest priority in a plurality of priorities of logical channels between the terminal and the another terminal; and
(4) being indicated in downlink control information or sidelink control information received by the terminal.

In this embodiment of this application, the priority of the new PC5 MAC CE is higher than a priority of a sidelink configured grant confirmation MAC CE; or the priority of the new PC5 MAC CE is higher than a priority of listen before talk failure MAC CE; or the priority of the new PC5 MAC CE is higher than a priority of sidelink buffer status report BSR MAC CE; or the priority of the new PC5 MAC CE is higher than a priority of MAC CE for BSR except for BSR for padding; or the priority of the new PC5 MAC CE is higher than a priority of data from any logical channel except data from an uplink common control channel.

Optionally, the MAC subheader includes an LCID and/or eLCID, the LCID and/or eLCID being used to indicate that the new PC5 MAC CE is used to control Sidelink DRX.

Optionally, the LCID or eLCID is provided in a quantity of at least two; and a first LCID or eLCID is used to indicate that the new PC5 MAC CE is a DRX command MAC CE, and a second LCID or eLCID is used to indicate that the new PC5 MAC CE is a Long DRX command MAC CE.

Optionally, the MAC subheader further includes:
seventh information, the seventh information indicating that the new PC5 MAC CE is a DRX command MAC CE or a Long DRX command MAC CE, and the seventh information being an LCID.

Optionally, the new PC5 MAC CE carries eighth information, and the eighth information indicates one or more of the following:
(1) a pool ID, indicating that Sidelink DRX control is performed on a corresponding pool; and
(2) an offset value, after which Sidelink DRX control is performed.

In this embodiment of this application, in a case that the terminal receives DRX command MAC CE, the method further includes:
in a case that the terminal is configured with short cycle DRX, starting or restarting, by the terminal, a sidelink discontinuous reception short cycle timer (sidelink drx-ShortCycleTimer) that is used to control short cycle duration.

In this embodiment of this application, the method further includes: using a short DRX cycle before the sidelink drx-ShortCycleTimer expires; or using a long DRX cycle after the sidelink drx-ShortCycleTimer expires.

In this embodiment of this application, in a case that the terminal receives Long DRX command MAC CE, the method further includes: stopping, by the terminal, sidelink drx-ShortCycleTimer, and using a long DRX cycle.

The following describes control signaling with reference to Manner 1, Manner 2, Manner 3, and Manner 4. Manner 1: DRX command MAC CE is multiplexed for control on sidelink DRX.

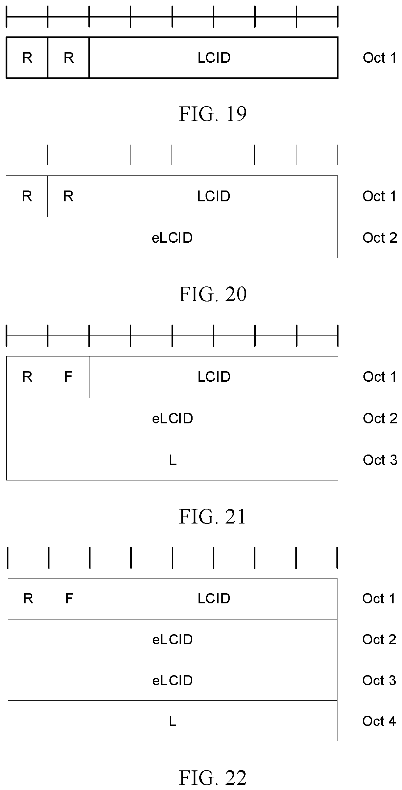

As shown in FIG. 19, LCID = 60.
(1) One of the two reserved bits ("R") is used to indicate whether control signaling is for PC5 or Uu, and the other reserved bit still serves as a reserved bit.
   For example, "R+0" indicates that a DRX command for PC5 is received, and "R+1" indicates that a DRX command for Uu is received. In this way, if a base station transmits two DRX commands for PC5 and Uu respectively, whether a DRX command is for PC5 or Uu can be determined based on a received DRX command MAC CE.
(2) Both the two reserved bits are used to indicate whether control signaling is for PC5 or Uu.

For example, "01" indicates that a DRX command for Uu is received, "10" indicates that a DRX command for PC5 is received, and " 11" indicates that a received DRX command applies to either of Uu and PC5.

Alternatively, multiplexing of DRX command MAC CE for control on sidelink DRX may also be implemented without using R bits. For example, it is considered by default that after a DRX command is received, if SL DRX and Uu DRX are configured for a user, the command applies to both SL DRX and Uu DRX.

Manner 2: Long DRX command MAC CE is multiplexed for control on sidelink DRX.

As shown in FIG. 19, LCID = 59.
(1) One of the two reserved bits is used to indicate whether control signaling is for PC5 or Uu, and the other reserved bit still serves as a reserved bit.
   For example, "R+0" indicates that a Long DRX command for PC5 is received, and "R+1" indicates that a Long DRX command for Uu is received. In this way, if a base station transmits two Long DRX commands for PC5 and Uu respectively, whether a Long DRX command is for PC5 or Uu can be determined based on a received Long DRX command MAC CE.
(2) Both the two reserved bits are used to indicate whether control signaling is for PC5 or Uu.

For example, "01" indicates that a Long DRX command for Uu is received, "10" indicates that a Long DRX command for PC5 is received, and "11" indicates that a received Long DRX command applies to both Uu and PC5.

Multiplexing of DRX command MAC CE for control on sidelink DRX may also be implemented without using R bits. For example, it is considered by default that a DRX command is received, and if SL DRX and Uu DRX are configured for a user, the command applies to both SL DRX and Uu DRX.

Manner 3: New Uu MAC CE is designed for control on sidelink DRX.

Case 1: Fixed-sized (size) MAC CE is used.

As shown in FIG. 19 and FIG. 20, one of reserved values of indexes = 35 to 46 may be used as an LCID to define this MAC CE to control sidelink DRX, or one of reserved values of indexes = 64 to 308 may alternatively be used as an eLCID to define this MAC CE to control sidelink DRX.

For DRX command MAC CE or Long DRX command MAC CE used for Uu control on SL DRX, an LCID/eLCID with a new reserved value may be used, or an LCID/eLCID with an old reserved value may be used. R bits are used to distinguish between DRX command MAC CE and Long DRX command MAC CE.

Case 2: Variable-sized MAC CE is used.

Selection of LCID/eLCID is as in Case 1.

For an L field, a link ID or a destination ID or a pool ID may be considered to be carried to indicate a link/destination/pool corresponding to DRX configuration controlled by this MAC CE.

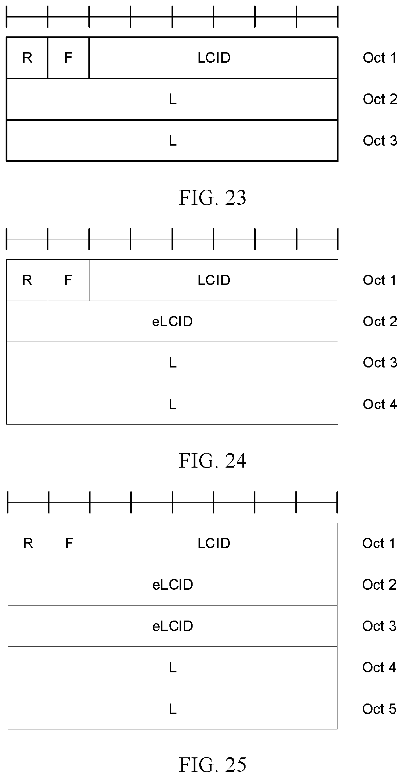

As shown in FIG. 21, FIG. 22, FIG. 23, FIG. 24, and FIG. 25, a specific format may be selected from any one thereof.

Manner 4: New PC5 MAC CE is designed for control on sidelink DRX.

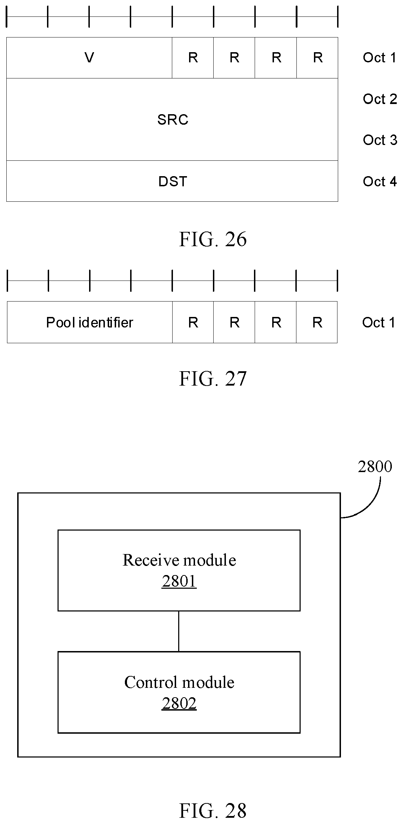

Case 1: sidelink MAC PDU = SL - SCH MAC subheader (as shown in FIG. 26) + one or more MAC subPDUs.

One MAC subPDU only includes one MAC subheader (including padding) that is used for SL DRX control, as shown in FIG. 19.

One of reserved values of indexes = 20 to 61 may be used as an LCID to define this MAC CE to control sidelink DRX.

For DRX command MAC CE or Long DRX command MAC CE for PC5 sidelink DRX control, an LCID with a new reserved value may be used, or an LCID with a same reserved value may be used. For example, R bits are used to distinguish between DRX command MAC CE and Long DRX command MAC CE.

Case 2: SL MAC PDU = SL - SCH MAC subheader (as shown in FIG. 26) + one or more MAC subPDUs.

One MAC subPDU includes one MAC subheader (as shown in FIG. 19) and one MAC CE (as shown in FIG. 27) that are used for SL DRX control.

The MAC CE may carry a pool ID for indicating which pool DRX configuration is for; or the MAC CE may carry an offset indicator for indicating how long after an offset UE needs to perform a corresponding operation; or the MAC CE may carry other required content.

The following is described with reference to Implementation 1 to Implementation 4 of this application.

Implementation 1 of this application:
Step 1. A base station transmits a DRX command MAC CE to UE, where a second bit of the MAC CE is 1, and a third bit to an eighth bit indicate that LCID = 60, indicating that the MAC CE is used to control SL DRX.
Step 2. The UE receives the DRX command MAC CE and performs at least one of the following operations:
   (1) stopping a sidelink discontinuous reception (Sidelink Discontinuous Reception, DRX) on duration timer (onDurationTimer); and
   (2) stopping a sidelink discontinuous reception-inactivity timer (sidelink drx-Inactivity Timer).
Step 3. If the LTE is configured with short cycle DRX, the LTE starts or restarts a sidelink discontinuous reception short cycle timer (sidelink drx-ShortCycleTimer) that is used to control short cycle duration, and the LTE uses a short DRX cycle before the timer expires, and uses a long DRX cycle after the timer expires.

Implementation 2 of this application:
Step 1. A base station transmits a Long DRX command MAC CE to LTE, where a second bit of the MAC CE is 1, and a third bit to an eighth bit indicate that LCID = 59, indicating that the MAC CE is used to control SL DRX.
Step 2. The LTE receives the Long DRX command MAC CE and performs at least one of the following operations:
   (1) stopping Sidelink drx-onDurationTimer; and
   (2) stopping sidelink drx-InactivityTimer.
Step 3. The LTE stops sidelink drx-ShortCycleTimer and uses a long DRX cycle.

Implementation 3 of this application:
Case 1:
   Step 1. A base station transmits a DRX command MAC CE or a Long DRX command MAC CE to UE. For selection of LCID/eLCID, refer to description in Case 1 of Manner 3.
   Step 2. The UE receives the MAC CE and performs at least one of the following operations:
      (1) stopping Sidelink drx-onDurationTimer; and
      (2) stopping sidelink drx-InactivityTimer.
   Step 3. Based on whether a DRX command MAC CE or Long DRX command MAC CE is received, a step similar to Step 3 in Implementation 1 of this application or Implementation 2 of this application is performed.
Case 2:
   Step 1. A base station transmits a DRX command MAC CE or a Long DRX command MAC CE to UE. For selection of LCID/eLCID, refer to description in Case 1 of Manner 3.
      The MAC CE includes an L field, which can further indicate other information, such as a pool ID (pool ID) or a destination ID (destination ID) or a link ID (link ID).
   Step 2. The UE receives the MAC CE and performs at least one of the following operations:
      (1) stopping Sidelink drx-onDurationTimer corresponding to an indicated pool or destination or link; and
      (2) stopping sidelink drx-InactivityTimer corresponding to an indicated pool or destination or link.
   Step 3. Based on whether a DRX command MAC CE or Long DRX command MAC CE is received, a step similar to Step 3 in Implementation 1 of this application or Implementation 2 of this application is performed.

Implementation 4 of this application:
Step 1. UE1 transmits a DRX command MAC CE or a Long DRX command MAC CE to UE2. For selection of LCID, refer to Manner 4. Optionally, the MAC CE may be a MAC CE with a fixed size of zero (Case 1 in Manner 4), or may alternatively be a MAC CE with a size of non-zero (Case 2 in Manner 4).
Step 2. The LTE2 receives the DRX command MAC CE or Long DRX command MAC CE and performs at least one of the following operations:
   (1) stopping Sidelink drx-onDurationTimer; and
   (2) stopping sidelink drx-InactivityTimer.

Optionally, if the DRX command MAC CE or Long DRX command MAC CE further carries a pool ID, the operation may be performed only on a DRX-related timer of a corresponding pool.

Optionally, if the DRX command MAC CE or Long DRX command MAC CE further carries an offset value, the operation may be performed on a DRX-related timer of after the offset value.

Step 3. Based on whether a DRX command MAC CE or Long DRX command MAC CE is received, a step similar to Step 3 in Implementation 1 or Implementation 2 is performed.

As shown in FIG. 28, an embodiment of this application provides a Sidelink DRX control apparatus, and the apparatus 2800 includes:
a receive module 2801, configured to receive control signaling, where the control signaling is used for Uu and/or PC5 Sidelink DRX control, and the control signaling is MAC signaling; and
a control module 2802, configured to perform Sidelink DRX control according to the control signaling.

In this embodiment of this application, the control signaling includes DRX command MAC CE; or the control signaling includes Long DRX command MAC CE; or the control signaling includes new Uu MAC CE; or the control signaling includes new PC5 MAC CE.

Optionally, the control signaling includes DRX command MAC CE, and the DRX command MAC CE includes first information used to indicate that the DRX command MAC CE is used to control Sidelink DRX, the first information being an LCID; or in a case that a terminal is configured with Sidelink DRX and Uu DRX, the DRX command MAC CE is used to control Sidelink DRX and Uu DRX.

Optionally, the DRX command MAC CE further includes second information used to indicate that the DRX command MAC CE is a DRX command for Uu and/or PC5.

Optionally, the second information is one or more reserved fields in the DRX command MAC CE.

Optionally, the control signaling includes Long DRX command MAC CE, and the Long DRX command MAC CE includes third information used to indicate that the Long DRX command MAC CE is used to control Sidelink DRX, the third information being an LCID; or in a case that the terminal is configured with Sidelink DRX and Uu DRX, the Long DRX command MAC CE is used to control Sidelink DRX and Uu DRX.

Optionally, the Long DRX command MAC CE further includes fourth information used to indicate that the Long DRX command MAC CE is a Long DRX command for Uu and/or PC5.

Optionally, the fourth information is one or more reserved fields in the Long DRX command MAC CE.

Optionally, the control signaling includes the new Uu MAC CE,
and the new Uu MAC CE includes an LCID and/or eLCID, the LCID and/or eLCID being used to indicate that the new Uu MAC CE is used to control Sidelink DRX.

Optionally, the LCID or eLCID is provided in a quantity of at least two; and a first LCID or eLCID is used to indicate that the new Uu MAC CE is a DRX command MAC CE, and a second LCID or eLCID is used to indicate that the new Uu MAC CE is a Long DRX command MAC CE.

Optionally, the new Uu MAC CE further includes:
fifth information, the fifth information indicating that the new Uu MAC CE is a DRX command MAC CE or a Long DRX command MAC CE.

Optionally, the new Uu MAC CE further includes sixth information; and
the sixth information carries a link ID that is used to indicate DRX configuration corresponding to a link controlled by the new Uu MAC CE;
   or
the sixth information carries a destination ID that is used to indicate DRX configuration corresponding to a destination controlled by the new Uu MAC CE;
   or
the sixth information carries a pool ID that is used to indicate DRX configuration corresponding to a pool controlled by the new Uu MAC CE.

Optionally, the control signaling includes the new PC5 MAC CE, and the new PC5 MAC CE includes a MAC subheader and a MAC CE, where the size of the MAC CE is zero or non-zero.

Optionally, a priority of the new PC5 MAC CE is determined in at least one of the following manners:
(1) being specified by a protocol;
(2) being configured on a network side;
(3) being a priority related to services between the terminal and another terminal,
   for example, the highest or lowest priority in a plurality of priorities of logical channels between the terminal and the another terminal; and
(4) being indicated in downlink control information or sidelink control information received by the terminal.

Optionally, the MAC subheader includes an LCID and/or eLCID, the LCID and/or eLCID being used to indicate that the new PC5 MAC CE is used to control Sidelink DRX.

Optionally, the MAC subheader further includes:
seventh information, the seventh information indicating that the new PC5 MAC CE is a DRX command MAC CE or a Long DRX command MAC CE.

Optionally, the new PC5 MAC CE carries eighth information, and the eighth information indicates a pool ID, indicating that Sidelink DRX control is performed on a corresponding pool;
or
the eighth information indicates an offset value, and Sidelink DRX control is performed after the offset value.

Optionally, the performing Sidelink DRX control includes:
stopping Sidelink drx-onDurationTimer;
   or
stopping sidelink drx-InactivityTimer.

In this embodiment of this application, the apparatus further includes:
a first processing module, configured to: in a case that the terminal is configured with short cycle DRX, start or restart sidelink drx-ShortCycleTimer that is used to control short cycle duration.

In this embodiment of this application, the apparatus further includes:
a second processing module, configured to: use a short DRX cycle before the sidelink drx-ShortCycleTimer expires; or use a long DRX cycle after the sidelink drx-ShortCycleTimer expires.

In this embodiment of this application, the apparatus further includes:
a third processing module, configured to: in a case that the terminal stops sidelink drx-ShortCycleTimer, use a long DRX cycle.

The control apparatus provided in this embodiment of this application is capable of implementing various processes that are implemented in the method embodiment of FIG. 18, with the same technical effects achieved. To avoid repetition, details are not described herein again.

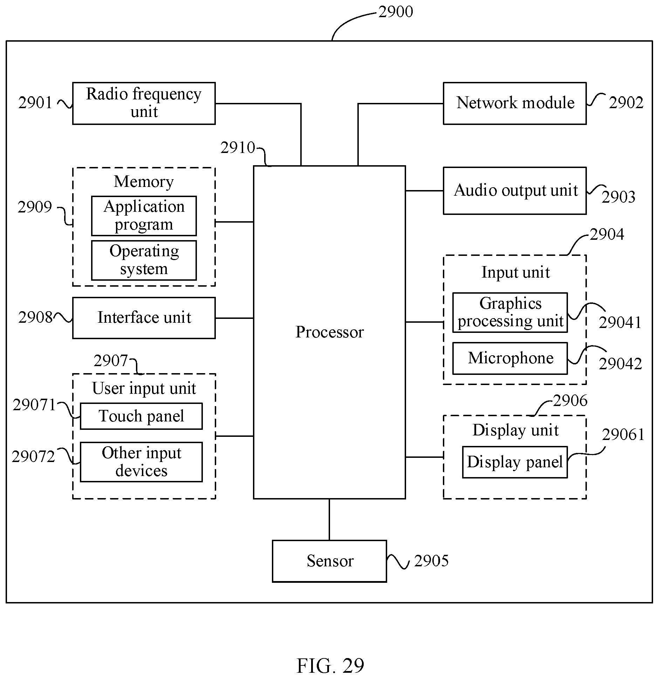

FIG. 29 is a schematic diagram of a hardware structure of a terminal for implementing the embodiments of this application.

The terminal 2900 includes but is not limited to components such as a radio frequency unit 2901, a network module 2902, an audio output unit 2903, an input unit 2904, a sensor 2905, a display unit 2906, a user input unit 2907, an interface unit 2908, a memory 2909, and a processor 2910.

Persons skilled in the art can understand that the terminal 2900 may further include a power supply (such as a battery) for supplying power to the components. The power supply may be logically connected to the processor 2910 via a power management system. In this way, functions such as charge management, discharge management, and power consumption management are implemented via the power management system. The terminal structure shown in FIG. 29 does not constitute a limitation to the terminal. The terminal may include more or fewer components than shown in the figure, or a combination of some components, or have different arrangements of components. Details are not described herein again.

It should be understood that in this embodiment of this application, the input unit 2904 may include a graphics processing unit (Graphics Processing Unit, GPU) 29041 and a microphone 29042. The graphics processing unit 29041 processes image data of a static picture or a video that is obtained by an image capture apparatus (for example, a camera) in an image capture mode or a video capture mode. The display unit 2906 may include a display panel 29061, and the display panel 29061 may be configured in a form of a liquid crystal display, an organic light-emitting diode display, or the like. The user input unit 2907 includes a touch panel 29071 and other input devices 29072. The touch panel 29071 is also referred to as a touchscreen. The touch panel 29071 may include two parts: a touch detection apparatus and a touch controller. The other input devices 29072 may include but are not limited to a physical keyboard, a functional button (such as a volume control button or a power on/off button), a trackball, a mouse, and a joystick. Details are not described herein.

In this embodiment of this application, the radio frequency unit 2901 sends downlink information received from a network-side device to the processor 2910 for processing, and in addition, sends uplink data to the network-side device. Generally, the radio frequency unit 2901 includes but is not limited to an antenna, at least one amplifier, a transceiver, a coupler, a low noise amplifier, and a duplexer.

The memory 2909 may be configured to store software programs and various data. The memory 2909 may mainly include a program or instruction storage area and a data storage area. The program or instruction storage area may store an operating system, an application program or instructions required by at least one function (for example, an audio playing function or an image playing function), and the like. In addition, the memory 2909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 2910 may include one or more processing units. Optionally, the processor 2910 may integrate an application processor and a modem processor. The application processor mainly processes an operating system, a user interface, application programs or instructions, and the like. The modem processor mainly processes wireless communication, for example, a baseband processor. It should be understood that alternatively, the modem processor may not be integrated into the processor 2910.

The terminal provided in this embodiment of this application is capable of implementing various processes that are implemented in the method embodiment shown in FIG. 18, with the same technical effects achieved. To avoid repetition, details are not described herein again.

An embodiment of this application further provides a program product, where the program product is stored in a non-volatile storage medium, and the program product is executed by at least one processor to implement the steps of the control method described in FIG. 18.

An embodiment of this application further provides a readable storage medium, where the readable storage medium stores a program or instructions, and when the program or instructions are executed by a processor, the processes of the foregoing method embodiment of FIG. 18 are implemented, with the same technical effects achieved. To avoid repetition, details are not described herein again.

The processor is the processor in the terminal in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions of a network-side device to implement the processes of the foregoing method embodiment shown in FIG. 2, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more restrictions, an element defined by "including a ..." does not exclude another same element in the process, method, article, or apparatus that includes the element. In addition, it should be noted that the scopes of the method and apparatus in the implementations of this application are not limited to performing functions in the order shown or discussed, but may further include performing functions at substantially the same time or in a reverse order depending on the functions involved. For example, the described method may be performed in an order different from the described order, and steps may be added, omitted, or combined. In addition, features described with reference to some examples may be combined in other examples.

From the foregoing description of the implementations, persons skilled in the art can clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms that do not depart from principles of this application and the protection scope of the claims, and all such forms fall within the protection scope of this application.

## Claims

1. A sidelink discontinuous reception Sidelink DRX control method, comprising:
receiving, by a terminal, control signaling, wherein the control signaling is used for Uu and/or PC5 Sidelink DRX control; and
performing, by the terminal, Sidelink DRX control according to the control signaling; wherein
the control signaling is medium access control MAC signaling.

2. The method according to claim 1, wherein
the control signaling comprises discontinuous reception command medium access control control element DRX command MAC CE;
or
the control signaling comprises long discontinuous reception command medium access control control element Long DRX command MAC CE;
or
the control signaling comprises new Uu MAC CE;
or
the control signaling comprises new PC5 MAC CE.

3. The method according to claim 2, wherein the control signaling comprises DRX command MAC CE; and
the DRX command MAC CE comprises first information used to indicate that the DRX command MAC CE is used to control Sidelink DRX, the first information being a logical channel identifier LCID;
or
in a case that the terminal is configured with Sidelink DRX and Uu DRX, the DRX command MAC CE is used to control Sidelink DRX and Uu DRX.

4. The method according to claim 3, wherein the DRX command MAC CE further comprises:
second information, used to indicate that the DRX command MAC CE is a DRX command for Uu and/or PC5.

5. The method according to claim 4, wherein the second information is one or more reserved fields in the DRX command MAC CE.

6. The method according to claim 2, wherein the control signaling comprises Long DRX command MAC CE; and
the Long DRX command MAC CE comprises third information used to indicate that the Long DRX command MAC CE is used to control Sidelink DRX, the third information being an LCID;
or
in a case that the terminal is configured with Sidelink DRX and Uu DRX, the Long DRX command MAC CE is used to control Sidelink DRX and Uu DRX.

7. The method according to claim 6, wherein the Long DRX command MAC CE further comprises:
fourth information, used to indicate that the Long DRX command MAC CE is a Long DRX command for Uu and/or PC5.

8. The method according to claim 7, wherein the fourth information is one or more reserved fields in the Long DRX command MAC CE.

9. The method according to claim 2, wherein the control signaling comprises the new Uu MAC CE; and
the new Uu MAC CE comprises a logical channel identifier LCID and/or an extended logical channel identifier eLCID, the LCID and/or eLCID being used to indicate that the new Uu MAC CE is used to control Sidelink DRX.

10. The method according to claim 9, wherein the LCID or eLCID is provided in a quantity of at least two; and a first LCID or eLCID is used to indicate that the new Uu MAC CE is a DRX command MAC CE, and a second LCID or eLCID is used to indicate that the new Uu MAC CE is a Long DRX command MAC CE.

11. The method according to claim 9, wherein the new Uu MAC CE further comprises:
fifth information, the fifth information indicating that the new Uu MAC CE is a DRX command MAC CE or a Long DRX command MAC CE.

12. The method according to claim 10 or 11, wherein the new Uu MAC CE further comprises sixth information; and
the sixth information carries a link identifier link ID that is used to indicate DRX configuration corresponding to a link controlled by the new Uu MAC CE;
or
the sixth information carries a destination identifier destination ID that is used to indicate DRX configuration corresponding to a destination controlled by the new Uu MAC CE;
or
the sixth information carries a pool identifier pool ID that is used to indicate DRX configuration corresponding to a pool controlled by the new Uu MAC CE.

13. The method according to claim 2, wherein a priority of the new PC5 MAC CE is determined in at least one of the following manners:
being specified by a protocol;
being configured on a network side;
being a priority related to services between the terminal and another terminal; and
being indicated in downlink control information or sidelink control information received by the terminal.

14. The method according to claim 13, wherein the priority related to services between the terminal and another terminal comprises:
the highest or lowest priority in a plurality of priorities of logical channels between the terminal and the another terminal.

15. The method according to claim 2, wherein the new PC5 MAC CE comprises a MAC subheader, and the MAC subheader comprises an LCID and/or eLCID, the LCID and/or eLCID being used to indicate that the new PC5 MAC CE is used to control Sidelink DRX.

16. The method according to claim 15, wherein the LCID or eLCID is provided in a quantity of at least two; and a first LCID or eLCID is used to indicate that the new PC5 MAC CE is a DRX command MAC CE, and a second LCID or eLCID is used to indicate that the new PC5 MAC CE is a Long DRX command MAC CE.

17. The method according to claim 15, wherein the MAC subheader further comprises:
seventh information, the seventh information indicating that the new PC5 MAC CE is a DRX command MAC CE or a Long DRX command MAC CE, and the seventh information being an LCID.

18. The method according to claim 15, wherein the new PC5 MAC CE further carries eighth information, and the eighth information indicates a pool ID, indicating that Sidelink DRX control is performed on a corresponding pool;
or
the eighth information indicates an offset value, and Sidelink DRX control is performed after the offset value.

19. The method according to any one of claims 1 to 18, wherein the performing Sidelink DRX control comprises:
stopping a sidelink discontinuous reception duration timer Sidelink drx-onDurationTimer;
or
stopping a sidelink discontinuous reception inactivity timer sidelink drx-Inactivity Timer.

20. The method according to claim 1 or 2, wherein in a case that the terminal receives DRX command MAC CE, the method further comprises:
in a case that the terminal is configured with short cycle DRX, starting or restarting, by the terminal, a sidelink discontinuous reception short cycle timer sidelink drx-ShortCycleTimer that is used to control short cycle duration.

21. The method according to claim 20, further comprising:
using a short DRX cycle before the sidelink drx-ShortCycleTimer expires;
or
using a long DRX cycle after the sidelink drx-ShortCycleTimer expires.

22. The method according to claim 1 or 2, wherein in a case that the terminal receives Long DRX command MAC CE, the method further comprises:
stopping, by the terminal, sidelink drx-ShortCycleTimer, and using a long DRX cycle.

23. A Sidelink DRX control apparatus, applied to a terminal and comprising:
a receive module, configured to receive control signaling, where the control signaling is used for Uu and/or PC5 Sidelink DRX control; and
a control module, configured to perform Sidelink DRX control according to the control signaling; wherein
the control signaling is MAC signaling.

24. The control apparatus according to claim 23, wherein the control signaling comprises DRX command MAC CE; or the control signaling comprises Long DRX command MAC CE; or the control signaling comprises new Uu MAC CE; or the control signaling comprises new PC5 MAC CE.

25. The control apparatus according to claim 24, wherein the control signaling comprises: DRX command MAC CE; and the DRX command MAC CE comprises first information used to indicate that the DRX command MAC CE is used to control Sidelink DRX, the first information being an LCID; or in a case that the terminal is configured with Sidelink DRX and Uu DRX, the DRX command MAC CE is used to control Sidelink DRX and Uu DRX.

26. The control apparatus according to claim 25, wherein the DRX command MAC CE further comprises second information used to indicate that the DRX command MAC CE is a DRX command for Uu and/or PC5.

27. The control apparatus according to claim 24, wherein the control signaling comprises Long DRX command MAC CE; and the Long DRX command MAC CE comprises third information used to indicate that the Long DRX command MAC CE is used to control Sidelink DRX, the third information being an LCID; or
in a case that the terminal is configured with Sidelink DRX and Uu DRX, the Long DRX command MAC CE is used to control Sidelink DRX and Uu DRX.

28. The control apparatus according to claim 27, wherein the Long DRX command MAC CE further comprises fourth information used to indicate that the Long DRX command MAC CE is a Long DRX command for Uu and/or PC5.

29. The control apparatus according to claim 24, wherein the control signaling comprises the new Uu MAC CE; and
the new Uu MAC CE comprises an LCID and/or eLCID, the LCID and/or eLCID being used to indicate that the new Uu MAC CE is used to control Sidelink DRX.

30. The control apparatus according to claim 24, wherein a priority of the new PC5 MAC CE is determined in at least one of the following manners:
being specified by a protocol;
being configured on a network side;
being a priority related to services between the terminal and another terminal; and
being indicated in downlink control information or sidelink control information received by the terminal.

31. The control apparatus according to claim 23, further comprising:
a first processing module, configured to: in a case that the terminal is configured with short cycle DRX, start or restart sidelink drx-ShortCycleTimer that is used to control short cycle duration.

32. The control apparatus according to claim 23, further comprising:
a second processing module, configured to: use a short DRX cycle before the sidelink drx-ShortCycleTimer expires; or use a long DRX cycle after the sidelink drx-ShortCycleTimer expires.

33. The control apparatus according to claim 23, further comprising:
a third processing module, configured to: in a case that the terminal stops sidelink drx-ShortCycleTimer, use a long DRX cycle.

34. A terminal, comprising a processor, a memory, and a program stored in the memory and capable of running on the processor, wherein when the program is executed by the processor, the steps of the method according to any one of claims 1 to 22 are implemented.

35. A readable storage medium, wherein the readable storage medium stores a program or instructions, and when the program or instructions are executed by a processor, the steps of the method according to any one of claims 1 to 22 are implemented.

36. A chip, comprising a processor and a communication interface, wherein the communication interface is coupled to the processor, and the processor is configured to run a program or instructions to implement the steps of the method according to any one of claims 1 to 22.

37. A program product, wherein the program product is stored in a non-volatile storage medium, and the program product is configured to be executed by at least one processor to implement the steps of the method according to any one of claims 1 to 22.
